# EUROPÄISCHE PATENTSCHRIFT

(11) **EP 2 784 469 B1**
(45) Veröffentlichungstag und Bekanntmachung des Hinweises auf die Patenterteilung: **14.06.2017**
(21) Anmeldenummer: 14161334.9
(22) Anmeldetag: 24.03.2014
(51) Int. Cl.: G01M 17/007

(54) **Prüfstandrolle mit einem Fahrbahnbelagelement**
Test bench roller with a roadway covering element
Rouleau de banc d'essai doté d'un élément de revêtement de bande de roulement

(30) Priorität: 25.03.2013 DE 102013205248
(43) Veröffentlichungstag der Anmeldung: 01.10.2014
(73) Patentinhaber: MAHA-AIP GmbH & Co. KG, 87490 Haldenwang (DE)
(72) Erfinder: Hartmann, Christian, D-87452 Altusried (DE); Knestel, Anton, D-87496 Hopferbach (DE); Becherer, Thomas, D-87463 Dietmannsried (DE)
(74) Vertreter: MERH-IP Matias Erny Reichl Hoffmann Patentanwälte PartG mbB

(56) Entgegenhaltungen:
- WO-A1-2008/034629
- WO-A1-2013/101134
- DE-A1- 19 704 606
- DE-C1- 10 141 973
- GB-A- 2 264 503
- JP-A- H0 321 844
- JP-A- 2006 038 776

## Beschreibung

Die vorliegende Erfindung betrifft eine Prüfstandrolle eines Rollenprüfstandes für Kraftfahrzeuge, auf der ein Fahrbahnbelagelement montierbar ist. Vorteilhaft ist bei der erfindungsgemäßen Prüfstandrolle, dass das Fahrbahnbelagelement über eine gesamte Mantelfläche der Prüfstandrolle gleichmäßig und fest anliegend fixiert werden kann. Insbesondere unerwünschte Störgeräusche, die von nicht gleichmäßig und fest anliegenden, herkömmlichen Fahrbahnbelagelementen erzeugt werden können, werden erfindungsgemäß vermieden.

Weiterhin betrifft die Erfindung ein Verfahren zum Wechseln oder Montieren der Fahrbahnbelagelemente. Vorteilhaft ist bei dem erfindungsgemäßen Verfahren, dass das Wechseln/Montieren des Fahrbahnbelagelementes (oder mehrerer) in sehr kurzer Zeit und weniger aufwendig durchgeführt werden kann.

Die Geräuschentwicklung eines auf einem Fahrbahnbelag abrollenden Reifens von Kraftfahrzeugen wird mittels sogenannter Akustikmessungen getestet. Dazu werden Fahrbahnbelagelemente (z.B. Belagschalen) auf (Prüfstand-)Rollen von Rollenprüfständen montiert, auf denen das Fahrzeug während der Akustikmessungen aufsteht.

Die Fahrbahnbelagelemente geben Oberflächen(-konturen) von realen Fahrbahnbelägen möglichst genau wieder. So kann die wiedergegebene Oberflächenkontur des realen Fahrbahnbelags z.B. jeder Art von einem gängigen Asphaltfahrbahnbelag, einem Kies- bzw. Schotterfahrbahnbelag, einem Kopfsteinpflasterbelag und dgl. entsprechen.

Es sind Belagschalen bekannt, die derart aufgebaut sind, dass auf einer Trägerplatte, z.B. aus Aluminium, eine Kunststoffschicht angeordnet ist. Die Kunststoffschicht gibt die Oberflächenkontur des zu testenden Fahrbahnuntergrundes wieder. Die bekannten Belagschalen sind kreissegmentförmig, so dass herkömmlicherweise eine Vielzahl Belagschalen hintereinander in Umfangsrichtung des Rollenmantels auf der Prüfstandrolle zu befestigen sind. Die Befestigung der Belageschalen erfolgt herkömmlicherweise mittels Schraubverbindungen, wobei die Schrauben senkrecht zur Oberfläche des Rollenmantels durch die Belagschalen in den Rollenmantel eingeschraubt werden.

Die herkömmlichen Belagschalen sind perfekt zylindersegmentförmig und weisen einen gleichen Radius wie ein Außenradius der Prüfstandrolle auf. Einzig mittels Schraubverbindungen werden die herkömmlichen Belagschalen auf der Prüfstandrolle fixiert. Während einer Messung, bei der die Rollenprüfstandrollen mit dem aufstehenden Kraftfahrzeug schnell rotiert werden, kann die Fixierung der herkömmlichen Belagschalen mittels (lediglich) Schraubverbindungen nicht ausreichend sein, da u.a. große Zentrifugalkräfte auf die Belagschalen wirken und die Belagschalen dadurch von der Prüfstandrolle (lokal) abheben können. Dadurch werden u.a. Vibrationen zwischen der Prüfstandrolle und den darauf montierten Belagschalen erzeugt. Diese Vibrationen können die Messergebnisse verfälschen, u.a. durch eine unerwünschte Geräuschentwicklung.

WO 2013/101134 A1 beschreibt ein Verfahren zur Herstellung einer Reifenbetriebsoberfläche einer Prüfstandrolle. Das Verfahren umfasst das Bereitstellen einer in Längsrichtung konvexen Bindungsfläche zum Empfangen einer strukturierten Reifenbetriebsoberfläche; Aufbringen von Klebemittel mit einer vorbestimmten Dicke entlang der in Längsrichtung konvexen Bindungsfläche zum Herstellen einer beschichteten Bindungsfläche mit einer in Längsrichtung konvexen Schicht Klebemittel entlang der Bindungsfläche; und Anordnen einer einzelnen Schicht von Aggregatmaterial entlang einer Haltefläche.

DE 197 04 606 A1 beschreibt eine Vorrichtung zur Bestimmung des Abrollverhaltens eines Fahrzeugreifens. Der Fahrzeugreifen rollt dazu mit seiner Lauffläche auf einer Kontaktfläche der Vorrichtung ab. Die Kontaktfläche ist in Achsrichtung in mehrere nebeneinander angeordnete, unabhängig voneinander gelagerte Kontaktflächenelemente aufgeteilt, die an der Position des Berührkontakts mit dem Reifen in einer tangentialen Richtung zur Umfangsrichtung des Reifens frei bewegbar sind.

DE 101 41 973 C1 betrifft einen fahrbaren Belag für Rollenprüfstände, wobei die statistische Rauigkeit, nicht aber die Welligkeit der natürlichen Straße auf die Lauftrommel kopiert wird, und eine periodische Schwingungsanregung des Testfahrzeugs mit Rollenumlauffrequenz vermieden wird.

B 2 264 503 A betrifft eine replizierte poröse Straßenoberfläche für eine Testmaschine zur Untersuchung von Reifengeräuschen und Fahrcharakteristika, wobei ein vordefiniertes Aggregatmaterial mit einem bestimmten spezifischen Gewicht und einer bestimmten Härte vorgesehen ist.

WO 2008/034629 A1 betrifft einen Rollenprüfstand und eine entsprechende Walze, wobei die Walze eine profilierte Oberfläche aufweist und die Profilierung durch Schweißpunkte gebildet ist, die auf der Oberfläche der Walze entlang wenigstens einer Schraubenlinie angeordnet sind.

Ferner ist das herkömmliche Verfahren zum Wechseln der vielen, einzelnen Belagschalen aufwendig und zeitintensiv. Insbesondere bei Prüfverfahren, die ein Wechseln der Fahrbahnbelagelemente während des Testens vorsehen, z.B. um die Geräuschentwicklung des Kraftfahrzeuges auf unterschiedlichen Untergrundgegebenheiten zu testen, werden bei herkömmlichen Verfahren aufwendige Umbauarbeiten notwendig, die zudem langwierig sind.

Aufgabe der Erfindung ist es, eine Prüfstandrolle mit einem darauf montierten Fahrbahnbelagelement und ein Verfahren zum Montieren des Fahrbahnbelagelementes bereitzustellen, bei der unerwünschte (parasitäre) Schwingungen und Geräuschentwicklungen, insbesondere zwischen der Mantelfläche der Prüfstandrolle und dem Fahrbahnbelagelement, reduziert werden. Gleichzeitig soll das Anordnen und/oder Wechseln von dem zumindest einen Fahrbahnbelagelement auf der Prüfstandrolle weniger zeitaufwendig und komplex sein.

Die Aufgabe wird durch die unabhängigen Patentansprüche gelöst. Bevorzugte Weiterentwicklungen der vorliegenden Erfindung werden durch die abhängigen Patentansprüche beschrieben.

Eine erfindungsgemäße Prüfstandrolle eines Rollenprüfstandes kann zumindest ein Rollenmantelelement, auf dessen äußerer Mantelfläche zumindest ein Fahrbahnbelagelement mittels zumindest einem Befestigungsmittel montierbar sein kann, umfassen. Ferner kann die Prüfstandrolle zumindest ein Rollenseitenwandelement aufweisen, das mit dem zumindest einen Rollenmantelelement verbunden ist.

Das zumindest eine Fahrbahnbelagelement kann eine Oberflächenkontur aufweisen, die die Oberflächenbeschaffenheit eines Fahrbahnbelages wiedergeben kann.

Das Fahrbahnbelagelement kann im auf der äußeren Mantelfläche des Rollenmantelelementes montierten Zustand elastisch oder teilelastisch verformt ist und eine Form aufweisen, die von einer Form des Fahrbahnbelagelementes im nicht-montierten Zustand abweichen kann.

Das Fahrbahnbelagelement kann im auf der äußeren Mantelfläche montierten Zustand eine zusätzliche mechanische Spannung im Vergleich zu einem Spannungszustand des Fahrbahnbelagelementes im nicht-montierten Zustand aufweisen.
umfassen, dass das Fahrbahnbelagelement auf dem Rollenmantelelement angeordnet wird und dann auf dem Rollenmantelelement fixiert wird.

"Nicht-montierter Zustand" bedeutet insbesondere, dass das Fahrbahnbelagelement separat von dem Rollenmantelelement vorliegt, d.h. noch nicht auf dem Rollenmantelelement montiert worden ist.

Die im montierten Zustand abweichende Form des Fahrbahnbelagelementes von der Form im nicht-montierten Zustand kann insbesondere dadurch erreicht werden, dass das Fahrbahnbelagelement während/bei der Montage an die Form der äußeren Mantelfläche angepasst wird. Das Anpassen kann insbesondere dadurch erfolgen, dass das Fahrbahnbelagelement (teil-)elastisch in Form gebogen wird bzw. ganz allgemein dessen Form derart verändert wird, dass diese mit der Form der äußeren Mantelfläche übereinstimmt.

Bevorzugt kann das Fahrbahnbelagelement im vormontierten Zustand Abweichungen von der äußeren Form des Rollenmantelelementes bzw. dessen äußerer Mantelfläche aufweisen, die beim Montieren durch ein Anpassen, z.B. ein (teil-)elastisches Biegen, des Fahrbahnbelagelementes ausgeglichen werden können. Bei diesem Anpassen werden mechanische Spannungszustände in dem Fahrbahnbelagelement verändert.

Beim Montieren des Fahrbahnbelagelementes kann eine mechanische Spannung, d.h. ein Spannungszustand des bzw. im Fahrbahnbelagelement(es), in dem Fahrbahnbelagelement wie beschrieben verändert werden. Dies kann bevorzugt durch das (elastisches und/oder teilelastisches) Anpassen der Form des Fahrbahnbelagelementes an die Form der äußeren Mantelfläche des Rollenmantelelementes erfolgen.

Das Ändern der Form und das daraus resultierende Ändern des Spannungszustandes des Fahrbahnbelagelementes beim Montieren kann insbesondere zur Folge haben, dass das Fahrbahnbelagelement im montierten Zustand fester, sicherer und gleichmäßiger auf der äußeren Mantelfläche aufliegend mit dem Rollenmantelelement verbunden ist.

Dies kann beispielsweise dadurch erreicht werden, dass die angepasst Form, z.B. mittels Schrauben, dauerhaft fixiert wird und der (veränderte) Spannungszustand in dem Fahrbahnbelagelement, d.h. eine Verspannung, eine zusätzliche resultierende Kraft bewirkt, die (im montierten Zustand) zusätzlich zur Haltekraft der Schrauben (oder sonstiger Befestigungsmittel) wirkt und somit eine festere Verbindung des Fahrbahnbelagelementes mit dem Rollenmantelelement ermöglicht.

Ferner kann das Fahrbahnbelagelement im nicht auf der äußeren Mantelfläche montierten Zustand eine Abweichung von einer Grundform aufweisen. Die Grundform des Fahrbahnbelagelementes kann im Wesentlichen mit einer Form der äußeren Mantelfläche übereinstimmen. Weiter kann das Fahrbahnbelagelement im auf der äußeren Mantelfläche montierten Zustand eine Form aufweisen, die im Wesentlichen mit der Grundform übereinstimmen kann.

Der Begriff "Grundform" soll insbesondere die grobe, phänotypische Form des Fahrbahnbelagelementes, die sich einem Betrachter auf den ersten Blick ohne Weiteres darstellt, beschreiben. Die Grundform kann (lokale) Abweichungen aufweisen, die die Grundform modifizieren.

Mit anderen Worten setzt sich die Form des nicht-montierten Fahrbahnbelagelementes im Wesentlichen aus der Grundform und den Abweichungen von dieser zusammen. Die Form des montierten Fahrbahnbelagelementes weist insbesondere keine Abweichungen mehr auf, so dass die Form dann im Wesentlichen der Grundform entspricht bzw. mit dieser übereinstimmt.

Ferner kann die Grundform des Fahrbahnbelagelementes im Wesentlichen zylindrisch oder im Wesentlichen zylindersegmentförmig sein. Das Fahrbahnbelagelement kann beim Montieren auf der äußeren Mantelfläche des Rollenmantelelementes an die Form der äußeren Mantelfläche angepasst werden. Dabei kann die zusätzliche mechanische Spannung in das Fahrbahnbelagelement eingebracht werden.

Dies bedeutet insbesondere, dass beim Montieren des Fahrbahnbelagelementes auf dem Rollenmantelelement eine Form des Fahrbahnbelagelementes an die Form der äußeren Mantelfläche angepasst werden kann, wobei die Anpassung der Form dadurch erfolgen kann, dass eine Abweichung von der Grundform des Fahrbahnbelagelementes durch den Anpassvorgang bei der Montage ausgeglichen wird bzw. die Abweichung dabei entfernt wird.

Mit anderen Worten bedeutet dies, dass die Grundform des Fahrbahnbelagelementes im Wesentlichen an die Form der äußeren Mantelfläche des Rollenmantelelementes angepasst ist bzw. mit dieser im Wesentlichen übereinstimmt. Im montierten Zustand soll das Fahrbahnbelagelement möglichst gleichmäßig auf der äußeren Mantelfläche aufliegen und zudem fest und sicher darauf fixiert sein. Um dies zu erreichen, wird erfindungsgemäß auf ein im nicht-montierten Zustand von der Form der äußeren Mantelfläche abweichendes Fahrbahnbelagelement zurückgegriffen (d.h. ein Abweichung(en) aufweisendes Fahrbahnbelagelement), das bei der Montage erst förmlich angepasst wird an das Rollenmantelelement. Das dabei notwendige Verbiegen/Verändern der Form des Fahrbahnbelagelementes führt zu mechanischen Spannungsänderungen in dem Fahrbahnbelagelement. Diese veränderte Spannung bzw. dieser veränderte Spannungszustand bewirkt eine optimierte Verklemmung/Fixierung des Fahrbahnbelagelementes auf dem Rollenmantelelement insbesondere zusammen mit den Befestigungsmitteln. Dadurch ist es in besonders vorteilhafter Weise möglich, unerwünschte Geräuschentwicklungen durch Abhebungen der Belagschalen aufgrund der Zentrifugalkraft bei einer rotierenden Prüfstandrolle zu vermeiden.

Die Prüfstandrolle kann weiter derart ausgebildet sein, dass das Rollenmantelelement im Wesentlichen zylindrisch oder konisch geformt ist. Ferner kann das Rollenmantelelement eine vorbestimmte Breite in einer zur Prüfstandrolle axialen Richtung aufweisen. Eine Breite des Fahrbahnbelagelementes kann im Wesentlichen kleiner oder gleich der Breite des Rollenmantelelementes sein.

Zylindrisch bedeutet hier, dass das Rollenmantelelement einen Kreisdurchmesser aufweisen kann und eine vorbestimmte Breite in axialer Richtung haben kann. Die Breite kann bevorzugt zumindest genauso groß wie die Breite eines Kraftfahrzeugrades sein. Noch bevorzugter kann die Breite des Rollenmantelelementes deutlich größer als die eines Kraftfahrzeugrades sein, z.B. 0,5 m, 1m oder mehrere Meter.

Konisch bedeutet hier, dass der Kreisdurchmesser in Richtung der Breite des Rollenmantelelementes zunimmt oder abnimmt.

Ferner kann das Rollenmantelelement auch eine andere Form als die zylindrische oder konische Form aufweisen. Das (ggf. zylindrische) Fahrbahnbelagelement ist dann an diese andere Form des Rollenmantelelementes anzupassen.

Ferner kann das Fahrbahnbelagelement der Prüfstandrolle einstückig und im Wesentlichen zylindrisch ausgebildet sein. Ferner können auch mehrere, im Wesentlichen zylindersegmentförmige Fahrbahnbelagelemente zur Montage auf der Prüfstandrolle vorgesehen sein.

Die zylindrische Grundform kann Abweichungen von der Grundform aufweisen; z.B. kann die Grundform hin zu einer minimal elliptischen Form abweichen.

Zylindersegmentförmig bedeutet, dass das Fahrbahnbelagelement ein Segment des Rollenmantelelementes bedecken kann und im Wesentlichen einer Kreisform/Zylinderform angepasst ist. Allerdings kann die zylindersegmentförmige Grundform abgewandelt bzw. modifiziert sein durch eine oder mehrere Abweichungen, z.B. können die Außenkanten des Fahrbahnbelagelementes hochstehend ausgebildet vorliegen.

Das Fahrbahnbelagelement kann desweiteren aus mehreren Materialien oder aus einem Material bestehen. Bevorzugte Materialien sind Kunststoffe, Metalle, Faserverbu ndwerkstoffe.

Besonders bevorzugt weist das Fahrbahnbelagelement ein Metallträgerelement auf, auf dem eine Kunststoffschicht angeordnet ist. Dabei gibt die Kunststoffschicht die Oberflächenkontur des wiederzugebenden Fahrbahnbelages wieder.

Das Fahrbahnbelagelement kann in einem nicht auf dem Rollenmantelelement montierten Zustand eine oder mehrere Abweichungen von der Grundform des Fahrbahnbelagelementes aufweisen.

Eine erste Abweichung kann eine Abweichung von der Zylinder- bzw. Zylindersegmentform sein; z.B. kann eine geringfügig elliptische Form des Fahrbahnbelagelementes vorliegen, d.h. eine Abweichung von der zylindrischen Form mit zwei unterschiedlichen Radien. Die elliptische Abweichung von der zylindrischen Form ist bevorzugt geringfügig, d.h. z.B. es kann ein erster Radius um maximal 5 % von einem zweiten Radius abweichen. Besonders bevorzugt kann der erste Radius um maximal 1% vom zweiten Radius abweichen.

Die erste Abweichung ist freilich nur eine minimale Abweichung von der Grundform. Die Abweichung ist jedoch groß genug, dass das Fahrbahnbelagelement zum Montieren auf der Prüfstandrolle (teil-)elastisch in Form gebogen werden muss, um es gleichmäßig auf der äußeren Mantelfläche des zylindrischen Rollenmantelelementes aufzubringen. Durch das in Form Biegen bei der Montage und durch das Befestigen des in Form gebogenen Fahrbahnbelagelementes auf dem Rollenmantelelement mittels eines Befestigungsmittels entsteht in dem Fahrbahnbelagelement eine Verspannung/wird eine Verspannung erhalten aus der eine zusätzliche Kraft resultiert, die das Fahrbahnbelagelement fester und sicherer mit der äußeren Mantelfläche des Rollenmantelelementes verbindet.

Eine zweite Abweichung kann sein, dass Seitenkanten des Fahrbahnbelagelementes derart verformt sein können, dass ein axialer Querschnitt des Fahrbahnbelagelementes ein im Wesentlichen U-förmiges Profil aufweisen kann bzw. im Wesentlichen U-förmig ist.

Die zweite Abweichung ist auch derart beschreibbar, dass entlang einer Breitenrichtung bzw. senkrecht zu einer Umfangsrichtung des Fahrbahnbelagelementes dieses schalenförmig ist. In anderen Worten liegt das Fahrbahnbelagelement, wenn dieses auf dem Rollenmantelelement lose aufgelegt ist, nicht mit den Seitenkanten auf dem Rollenmantelelement auf.

Bei der Montage kann diese zweite Abweichung dadurch überwunden/ausgeglichen werden, dass der Monteur oder eine Maschine die Seitenkanten des Fahrbahnbelagelementes herunterdrückt und mittels eines Befestigungsmittels dauerhaft in dieser heruntergedrückten Position fixiert. Dadurch wird erreicht, dass das Fahrbahnbelagelement mit einer zusätzlichen Kraft viel fester und sicherer gleichmäßig und großflächig auf dem Rollenmantelelement fixiert wird.

Bevorzugt ist die zweite Abweichung derart beschaffen, dass die Seitenkanten des Fahrbahnbelagelementes jeweils zu einer ebenen Fläche einen Winkel von zumindest 0,5° bis maximal 45° bilden. Besonders bevorzugt wird ein Winkel zwischen 0,5° und 15°. Ganz besonders bevorzugt wird ein Winkel um ca. 5°.

Die oben genannten besonders und ganz besonders bevorzugten Winkelwerte ermöglichen, dass eine zusätzliche elastische Spannung in das Fahrbahnbelagelement eingebracht wird, wenn es an dem Rollenmantelelement montiert ist. Gleichzeitig wird bei den genannten Winkelwerten aber vermieden, dass sich das Fahrbahnbelagelement in Folge des Verbiegens bei der Montage in unerwünschter Weise mittig zu seiner Breitenrichtung (unerwünscht und unkontrolliert) ausbeult. Die oben genannten Winkelwerte ermöglichen folglich, dass das Fahrbahnbelagelement im fixierten Zustand sehr gleichmäßig an der äußeren Mantelfläche des Rollenmantelelementes anliegt.

Eine dritte Abweichung von der Grundform des Fahrbahnbelagelementes kann derart ausgestaltet sein, dass ein Radius des Fahrbahnbelagelementes kleiner sein kann als ein äußerer Radius des Rollenmantelelementes.

Die dritte Abweichung ist insofern ein Sonderfall, dass die Grundform, d.h. z.B. eine Zylinderform oder eine Zylindersegmentform, des Fahrbahnbelagelementes bereits im Wesentlichen vorliegt. Bei der dritten Abweichung ist die Abweichung deshalb im Sinne der Erfindung darin zu sehen, dass der Radius bzw. der Durchmesser des Fahrbahnbelagelementes im nicht-montierten Zustand vom Radius der äußeren Mantelfläche des Rollenmantelelementes abweicht.

Das einstückig zylindrische Fahrbahnbelagelement, das die dritte Abweichung bevorzugt aufweisen kann, kann bereits dadurch auf dem Rollenmantelelement fixiert werden, dass der kleinere Durchmesser (dritte Abweichung) des Fahrbahnbelagelemente kurzfristig (teil-)elastisch aufgeweitet wird. Dann wird das Fahrbahnbelagelement auf das Rollenmantelelement aufgezogen. Es bildet sich somit eine Klemmkraft zwischen dem einstückigen Fahrbahnbelagelement und dem Rollenmantelement aus.

Wenn das Rollenmantelelement im Wesentlichen konisch geformt ist, kann dies das Aufziehen insbesondere des einstückigen Fahrbahnbelagelementes vereinfachen. Das Fahrbahnbelagelement kann dann einfach soweit aufgeschoben werden, bis eine vorbestimmte Klemmkraft zwischen Rollenmantelelement und Fahrbahnbelagelement erzielt ist.

Die Differenz zwischen dem Radius des Fahrbahnbelagelementes im montierten Zustand gegenüber dem Radius im nicht-montierten Zustand kann bevorzugt bis zu +10% betragen, d.h. der Zustand im nicht-montierten Zustand ist kleiner. Besonders bevorzugt kann eine Radiusvergrößerung von bis zu 0,1% - 2% sein.

Bei den zylindersegmentförmigen Fahrbahnbelagelementen kann sich ein geringerer Radius im Vergleich zu dem der äußeren Mantelfläche des Rollenmantelelementes dahingehend positiv auswirken, dass das Fahrbahnbelagelement beim Montieren auf der Prüfstandrolle ebenfalls (teil-)elastisch aufgeweitet werden kann. In dem aufgeweiteten Zustand kann es dann mit einem Befestigungsmittel fixiert werden. Dadurch kann eine zusätzliche Kraft erzeugt werden, die das Fahrbahnbelagelement sicherer und fester mit der Prüfstandrolle verbinden kann.

Das Fahrbahnbelagelement der Prüfstandrolle kann die erste, zweite und/oder dritte Abweichung aufweisen. Dies bedeutet, dass die Abweichungen alle zusammen oder in einer beliebigen Kombination in einem Fahrbahnbelagelement vorgesehen sein können. Eine Kombination z.B. zweier Abweichungen kann die Fixierung weiter verbessern, z.B. eine Kombination der zweiten und der dritten Abweichung.

Das zumindest eine Fahrbahnbelagelement kann mittels zumindest einem an dessen Seitenkanten angeordneten kraftschlüssigen Befestigungsmittel mit der äußeren Oberfläche des Rollenmantelelementes fest verbunden sein. So kann das Fahrbahnbelagelement gleichmäßig an die äußere Oberfläche des Rollenmantelelementes angeschmiegt befestigt werden.

Das Fixieren des Fahrbahnbelagelementes an seinen Seitenkanten hat den Vorteil, dass ein Rad des zu prüfenden Kraftfahrzeuges nicht über Teile des Befestigungsmittels abrollt, wenn das Kraftfahrzeug getestet wird. Das Rad kann dann folglich auf dem Fahrbahnbelagelement und zwischen den seitlich montierten Befestigungsmitteln abrollen.

Das zumindest eine kraftschlüssige Befestigungsmittel kann eine Schraube oder Niete sein. Zusätzlich oder alternativ kann eine Befestigungseinrichtung als kraftschlüssiges Befestigungsmittel vorgesehen sein. Die Befestigungseinrichtung kann an den Seitenkanten des Rollenmantelelementes formschlüssig eingreifen. Ferner kann die Befestigungseinrichtung eine vorbestimmte Klemmkraft auf das Fahrbahnbelagelement ausüben.

Neben Schrauben und Nieten sind selbstverständlich auch alle weiteren geeigneten Befestigungsmittel einsetzbar. Die Befestigungseinrichtung hat den weiteren Vorteil, dass die Fixierung des Fahrbahnbelagelementes schneller durchführbar ist und keine ggf. störenden Schrauben bzw. Bohrlöcher vorgesehen werden müssen.

Soll über das Befestigen des Fahrbahnbelagelementes mittels der Befestigungseinrichtung hinaus eine weitere Verbesserung der Fixierung erreicht werden, so kann z.B. zusätzlich zur Befestigungseinrichtung auch weiterhin auf eine herkömmliche Schraubfixierung zurückgegriffen werden. Dabei kann jedoch die Anzahl der notwendigen Schraubverbindungen reduziert werden, da das Fahrbahnbelagelement bereits hinreichend insbesondere aufgrund der Befestigungseinrichtung fixiert ist.

Ferner kann ein erstes Eingriffselement der Befestigungseinrichtung mit einer Seitenkante des Rollenmantelelementes in Eingriff gebracht sein. Ferner kann mittels einer Schraubverbindung und eines zweiten Eingriffselementes eine vorbestimmte Klemmkraft zwischen dem Rollenmantelelement, dem Fahrbahnbelagelement und der Befestigungseinrichtung eingestellt werden.

Mittels der Schraubverbindung kann eine Klemmkraft, die die Befestigungseinrichtung aufbringt, genau eingestellt werden. Dies erhöht die Flexibilität der Einstellung der Fixierung des Fahrbahnbelagelementes.

Ferner kann ein Rollenprüfstand für Kraftfahrzeuge mit zumindest zwei erfindungsgemäßen Prüfstandrollen, die von zumindest einer Antriebswelle antreibbar sein können, vorgesehen sein.

Ferner umfasst die Erfindung ein Verfahren zum Montieren bzw. Demontieren zumindest eines Fahrbahnbelagelementes. Bevorzugt werden mit dem Verfahren die erfindungsgemäßen Fahrbahnbelagelemente montiert oder demontiert.

Das erfindungsgemäße Verfahren kann umfassen, dass das zumindest eine Fahrbahnbelagelement auf dem Rollenmantelelement elastisch oder teilelastisch verformt montiert werden kann. Die Abweichung von der Grundform des Fahrbahnbelagelementes kann durch ein Andrücken an das Rollenmantelelement und/oder Anpassen der Form des Fahrbahnbelagelementes an die Form der Mantelfläche des Rollenmantelelementes und ein Fixieren mittels des zumindest einen Befestigungsmittels überwunden werden/erfolgen.

Alternativ oder zusätzlich kann die Abweichung, insbesondere die dritte Abweichung, durch ein Aufweiten des Radius des Fahrbahnbelagelementes und ein Fixieren mittels zumindest eines kraftschlüssigen Befestigungsmittels überwunden werden. Das Anpassen der dritten Abweichung, d.h. das Aufweiten des Radius', ist auch als ein "Anpassen" der Form im Sinne der Erfindung zu verstehen.

Ferner kann das Verfahren gemäß der Erfindung umfassen, dass die Verfahrensschritte des Montierens des Fahrbahnbelagelementes auf der Prüfstandrolle im Voraus vorbereitet werden können. Weitere Schritte können dann sein, dass das (gesamte) Rollenmantelelement, auf dem das Fahrbahnbelagelement bereits vormontiert befestigt sein kann, von der Prüfstandrolle abgenommen werden kann bzw. an der Prüfstandrolle angeordnet und befestigt werden kann.

"Im Voraus vorbereit" bedeutet, dass z.B. Rollenmantelelemente mit vormontierten Fahrbahnbelagelementen während eines Prüfstandtestes als Austauschteile bereitgehalten werden. Die Rollenmantelelemente/Rollen können dann gemäß der weiteren erfindungsgemäßen Verfahrensschritte sehr schnell ausgetauscht werden.

Ferner können die Schritte des Verfahrens ausgeführt werden, dass das Rollenmantelelement, mit dem vormontierten Fahrbahnbelagelement, mittels einer Zentriereinrichtung des Rollenseitenwandelementes seitlich zu dem Rollenseitenwandelement angeordnet werden kann. Ferner kann zumindest ein weiteres Rollenseitenwandelement an dem Rollenmantelelement seitlich angeordnet werden, so dass ein geschlossener Rollenkörper gebildet werden kann. Ferner können mittels einer Schraubverbindung die Rollenseitenwandelemente und das Rollenmantelelement mit der Antriebswelle fest verbunden werden.

Das Verfahren kann ferner umfassen, dass die Prüfstandrolle mit dem vormontierten Fahrbahnbelagelement von der Antriebswelle gelöst bzw. daran befestigt werden kann.

Das Lösen bzw. das Befestigen der Prüfstandrolle an der Antriebswelle kann derart erfolgen, dass eine Schraubverbindung zwischen der Antriebswelle und einem Rollenseitenwandelement gelöst werden kann bzw. angezogen werden kann.

Das erfindungsgemäße Verfahren hat den Vorteil, dass das bzw. die Fahrbahnbelagelemente sehr präzise und gleichmäßig großflächig auf der äußeren Mantelfläche des Mantelelementes der Prüfstandrolle fixierbar ist/sind. Eine Abweichung, die insbesondere eine (Vor-)verformung (Bombierung) von der Grundform der Fahrbahnbelagelemente darstellt, wird durch das Anpassen bzw. Anpressen oder Verbiegen an die äußere Mantelfläche und das Fixieren mittels der Befestigungsmittel überwunden. Es entsteht eine zusätzliche Kraft, die das Fahrbahnbelagelement fester auf der äußeren Mantelfläche festhält als dies mit herkömmlichen Fahrbahnbelagelementen möglich ist.

Ferner ermöglicht das erfindungsgemäße Verfahren, insbesondere wenn Prüfstandrollen mit vormontierten Einheiten, die im Wesentlichen das Rollenmantelelement und die oder das aufmontierte Fahrbahnbelagelement umfassen, verwendet werden, ein sehr schnelles Umrüsten des Prüfstandes. Dies ist insbesondere von Bedeutung, wenn Teststandprüfläufe durchgeführt werden, bei denen innerhalb einer kurzen Zeit mehrere verschiedene Fahrbahnbelagtypen/Oberflächenkonturen getestet werden sollen.

Im Übrigen kann das Fahrbahnbelagelement, wenn es einstückig und im Wesentlichen zylindrisch ausgebildet ist, wie ein Reifen seitlich auf das Rollenmantelelement aufgezogen werden. Dies ist eine weitere Vereinfachung und Beschleunigung des Montage-/Demontageverfahrens gemäß der Erfindung. Es wird dann vermieden, dass eine Vielzahl einzelner zylindersegmentförmiger Fahrbahnbelagelemente nacheinander auf der Prüfstandrolle montiert werden müssen.

Zusammenfassend ermöglicht die Erfindung, dass Fahrbahnbelagelemente zuverlässiger an einem Rollenmantelelement einer Prüfstandrolle befestigt werden können. Dies vermeidet u.a., dass Messfehler durch unerwünschte Schwingungen oder unerwünschte Geräuschentwicklung erzeugt werden, die durch unzureichend befestigte Fahrbahnbelagelemente hervorgerufen werden. Das erfindungsgemäße Verfahren lehrt, die erfindungsgemäßen Fahrbahnbelagelemente sicher und schnell auf einer Prüfstandrolle zu befestigen. Ferner reduziert das erfindungsgemäße Verfahren auch den Aufwand und die Rüstzeiten beim Auswechseln eines Fahrbahnbelages.

Die Erfindung wird im Folgenden exemplarisch mit Bezug auf die beigefügten, schematischen Zeichnungen beschrieben. Es zeigen
Figur 1 zeigt schematisch ein erfindungsgemäßes, nicht-montiertes Fahrbahnbelagelement mit einer zweiten Abweichung von der Grundform, das lose auf einem Rollenmantelelement angeordnet ist,
Figur 2 zeigt schematisch ein erfindungsgemäßes, montiertes Fahrbahnbelagelement, das im nicht-montierten Zustand die zweite Abweichung aufgewiesen hat,
Figur 3 zeigt schematisch eine Prüfstandrolle mit einem erfindungsgemäß montierten Fahrbahnbelagelement,
Figur 4 zeigt schematisch eine weitere erfindungsgemäße Prüfstandrolle mit einem erfindungsgemäß montierten Fahrbahnbelagelement,
Figur 5 zeigt schematisch eine weitere erfindungsgemäße Prüfstandrolle mit einem erfindungsgemäß montierten Fahrbahnbelagelement,
Figur 6 zeigt schematisch eine erfindungsgemäße Befestigungseinrichtung des Fahrbahnbelagelementes der Prüfstandrolle und
Figur 7 zeigt schematisch eine weitere erfindungsgemäße Befestigungseinrichtung des Fahrbahnbelagelementes der Prüfstandrolle.

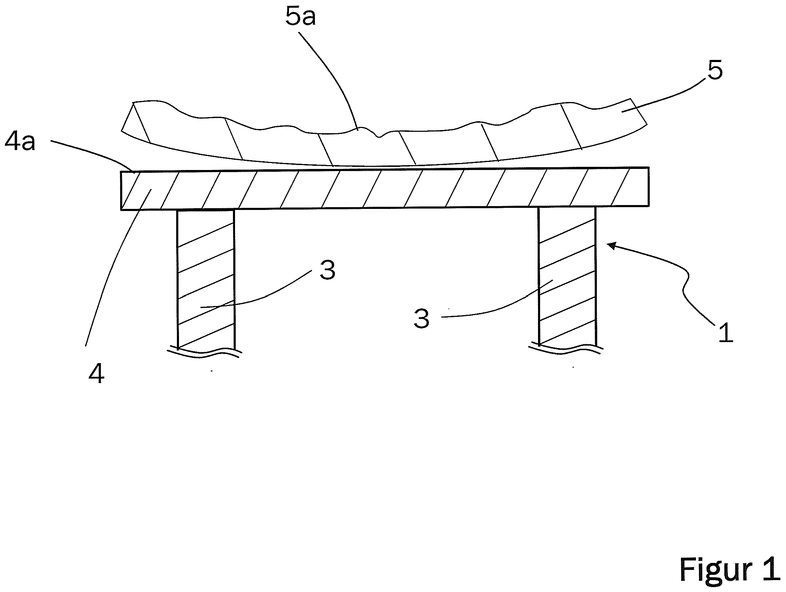

Figur 1 zeigt einen Schnitt eines Teils einer erfindungsgemäßen Prüfstandrolle 1, die im gezeigten Fall zwei Seitenwandelemente 3 aufweist. Ein Rollenmantelelement 4 ist fest mit den Seitenwandelementen 3 verbunden. Das Rollenmantelelement 4 ist bevorzugt im Wesentlichen zylindrisch geformt. Eine Breite B₄ des Rollenmantelelementes 4 beträgt zumindest die Breite eines typischen Kraftfahrzeugrades. Bevorzugt wird jedoch ein deutlich größere Breite B₄, die bis zu mehreren Metern sein kann.

Der im Prüfstand zu simulierende (reale) Fahrbahnbelag wird mittels eines Fahrbahnbelagelementes 5 wiedergegeben. Die Oberfläche 5a des Fahrbahnbelagelementes 5 ist sehr schematisch in Figur 1 dargestellt.

In Figur 1 ist eine besonders bevorzugte zweite Abweichung von einer Grundform des Fahrbahnbelagelementes 5 im Schnitt dargestellt. So zeigt die Figur 1, dass die Seitenkanten des Fahrbahnbelagelementes 5 im nicht fixierten Zustand hochstehen. Diese Bogen- oder U-Form muss für die Montage und Fixierung des Fahrbahnbelagelementes 5 auf dem Rollenmantelelement 4 überwunden werden. Dazu werden die Seitenkanten des Fahrbahnbelagelementes 5 (teil-)elastisch herabgedrückt bis sie plan und gleichmäßig großflächig auf der äußeren Mantelfläche 4a des Rollenmantelelementes 4 aufliegen.

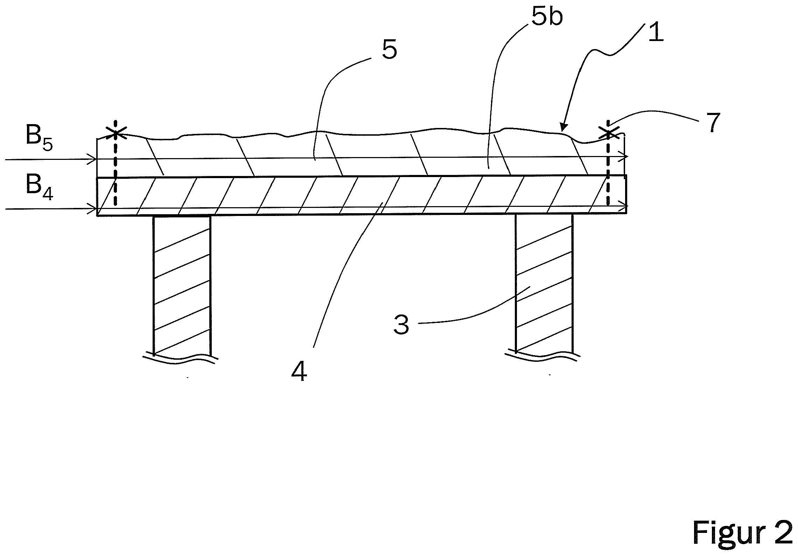

Danach kann das Fahrbahnbelagelement 5 wie in Figur 2 dargestellt mittels eines Befestigungsmittels 7 fixiert werden. Die Spannung, die in dem Fahrbahnbelagelement 5 beim Fixieren verändert wird, trägt im fixierten Zustand dazu bei, dass das Fahrbahnbelagelement 5 fester mit dem Rollenmantelelement zusammengehalten wird. Dies erfolgt im Falle der gezeigten zweiten Abweichung insbesondere dadurch, dass die im Fahrbahnbelagelement 5 bei der Montage eingebrachte mechanische Spannung, die durch das Niederdrücken der Seitenkanten erzielt wird, mit dem Befestigungsmittel 7 zusammen zu einer Verspannung führt, die eine erhöhte Befestigungskraft bewirkt.

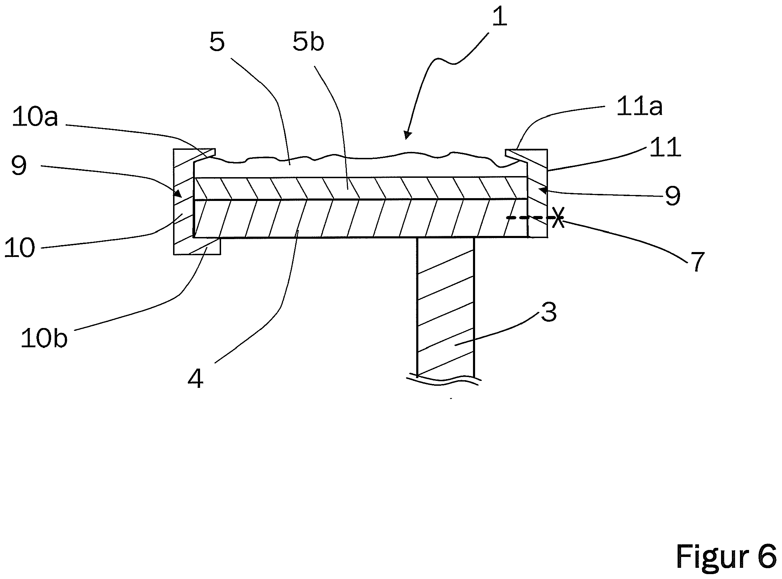

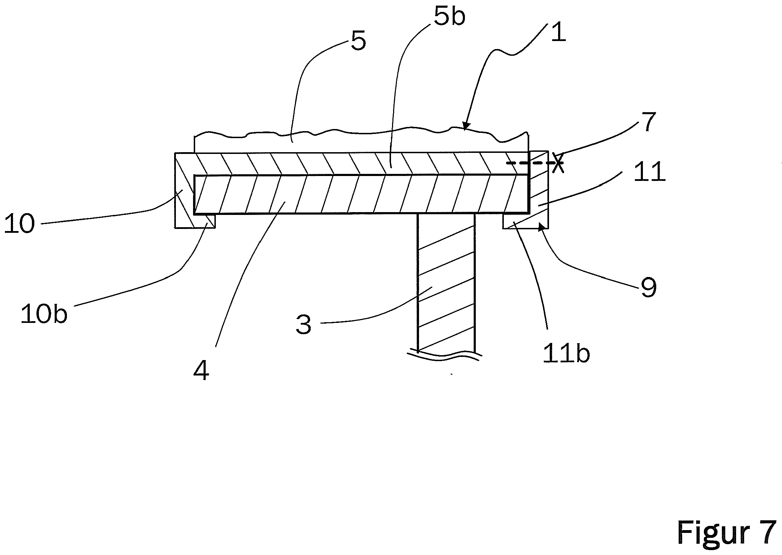

Selbstverständlich kann die Fixierung alternativ zur gezeigten Schraubverbindung(en) 7 oder zusätzlich dazu auch mittels der in den unten ausführlich beschriebenen Figuren 6 und 7 gezeigten Befestigungseinrichtung 9 realisiert werden.

Die in Figur 1 gezeigte zweite Abweichung ist eine bevorzugte Abweichung von der Grundform des Fahrbahnbelagelementes 5. Weitere, insbesondere eine erste und eine dritte Abweichung können alternativ oder zusätzlich vorgesehen sein.

Die erste Abweichung stellt eine Abweichung von der Zylinder- bzw. Zylindersegmentform des Fahrbahnbelagelementes 5 dar. Hier ist insbesondere an eine elliptische Abweichung von der Grundform zu denken. Weiterhin kann die erste Abweichung aber auch z.B. als lokale Aufweitungen/Verjüngungen des Radius' des Fahrbahnbelagelementes 5, die sich entlang dessen Umfangs wiederholen, ausgeprägt sein.

Die dritte Abweichung ist insofern ein gewisser Sonderfall, dass die Grundform des Fahrbahnbelagelementes 5 nicht wesentlich verändert ist. Vielmehr wird als dritte Abweichung hier insbesondere bezeichnet, dass der Radius des zylinder- oder zylindersegmentförmigen Fahrbahnbelagelementes 5 im Vergleich zum Radius der äußeren Mantelfläche 4a des Rollenmantelelementes 4 verkleinert ist. Diese dritte Abweichung bringt den weiteren Vorteil mit sich, dass, insbesondere bei der Montage eines einstückigen Fahrbahnbelagelementes 5, das Fahrbahnbelagelement 5 bereits durch die elastische Aufweitung des Fahrbahnbelagelementes 5 zur Befestigung auf dem Rollenmantelelement 4 eine Haltekraft zwischen Rollenmantelelement 4 und Fahrbahnbelagelement 5 erzeugt wird.

Die oben beschriebenen Abweichungen können erfindungsgemäß selbstverständlich für ein Fahrbahnbelagelement 5 beliebig miteinander kombiniert werden. So können beispielsweise die dritte und die zweite Abweichung für ein Fahrbahnbelagelement 5 vorgesehen sein. Dadurch wird die Zuverlässigkeit der Fixierung des Fahrbahnbelagelementes 5 sogar weiter verbessert.

Für die Montage und Fixierung des Fahrbahnbelagelementes 5, das zumindest eine der Abweichungen aufweist, ist es besonders vorteilhaft und bevorzugt, wenn das Fahrbahnbelagelement 5 beim Montieren auf der Prüfstandrolle 1 nur elastisch oder zumindest nur teilelastisch an die Form des Rollenmantelelementes 4 angepasst wird.

Somit ist die oben gezeigte Abweichung des Fahrbahnbelagelementes 5 von einer Grundform ein wichtiges technisches Prinzip der Erfindung, das dazu beiträgt, dass Messfehler durch unerwünschte Schwingungs- bzw. Geräuschentwicklungen zwischen dem/den Fahrbahnbelagelemente(n) 5 und dem Rollenmantelelement 4 vermieden werden können.

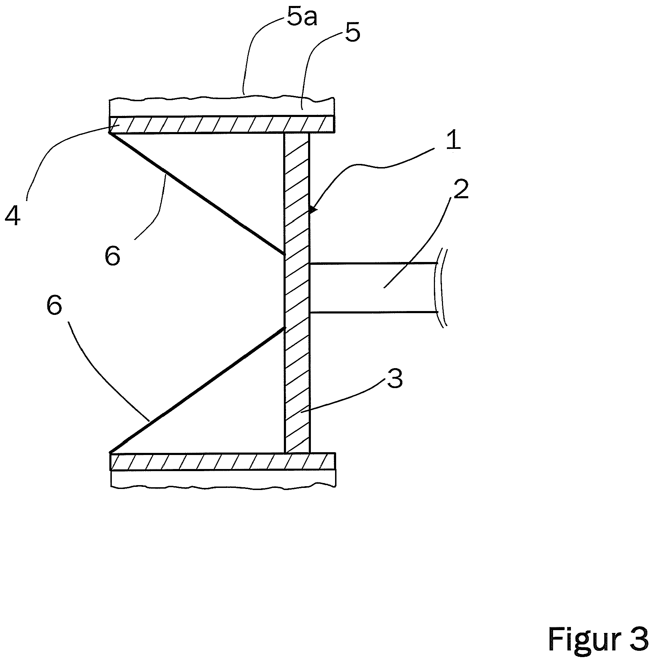

Weiterhin zeigen die Figuren 3 bis 5 erfindungsgemäße technische Optionen, das/die Fahrbahnbelagelement(e) 5 besonders einfach und zeiteffizient wechseln zu können. Dabei wird bevorzugt auf die erfindungsgemäßen Fahrbahnbelagelemente 5 zurückgegriffen. In Kombination ergibt sich, dass eine sichere Fixierung der Fahrbahnbelagelemente 5 bei schneller Wechselbarkeit/Austauschbarkeit erreicht wird. Figuren 6 und 7 zeigen zudem eine erfindungsgemäße Befestigungseinrichtung, die in Kombination mit den erfindungsgemäßen Fahrbahnbelagelementen 5 den Montage-/Demontageprozess weiter vereinfacht und die Sicherheit der Fixierung des Fahrbahnbelagelemente 5 weiter erhöht.

Figur 3 zeigt die erfindungsgemäße Prüfstandrolle 1 mit einem (Rollen-)Seitenwandelement 3, das mit einer Antriebswelle 2 des Rollenprüfstandes verbunden ist. Das Seitenwandelement 3 ist fest mit einem zylindrischen oder konischen (Rollen-)Mantelelement 4 verbunden. Auf der Außenfläche des Mantelelementes 4 ist zumindest ein Fahrbahnbelagelement 5 angeordnet. Das Fahrbahnbelagelement 5 weist an seiner Mantelaußenfläche die Oberflächenkontur 5a auf, die einen zu testenden Fahrbahnuntergrund bzw. - belag wiedergibt. Versteifungselemente 6, z.B. Speichen, Streben, Keile, und/oder dgl. verlaufen innerhalb des Hohlraums des Mantelelementes 4, um die mechanische Steifigkeit und Formtreue des Mantelelementes 4 zu erhöhen.

Das Seitenwandelement 3 und das Mantelelement 4 können einstückig ausgebildet sein. Ferner können beide Elemente auch fest miteinander z.B. über eine Schweiß-, Schraubverbindung oder dgl. miteinander verbunden sein. Ebenfalls können die Versteifungselemente 6 mittels einer Fügetechnik, z.B. Schweißen, Kleben, Schrauben, etc., mit dem Seitenwandelement 3 und dem Mantelelement 4 fest verbunden sein.

Die Verbindung zwischen der Prüfstandrolle 1 und der Antriebswelle 2 kann mittels unterschiedlicher optionaler Möglichkeiten ausgeführt sein, z.B. mittels einer Schraubverbindung, mittels einer Schweißverbindung, mittels einer Kraftschlussverbindung, etc. Besonders bevorzugt wird allerdings im Hinblick auf eine erfindungsgemäße Wechselmöglichkeit der Fahrbahnbelagelemente 1 eine lösbare Verbindung zwischen der Prüfstandrolle 1 und der Antriebswelle 2. Die Position des Seitenwandelementes 3 in axialer Richtung der Welle 2 kann dadurch vorbestimmt sein, dass die Welle 2 eine Durchmesservergrößerung (nicht gezeigt) aufweist, an der das Seitenwandelement 3 mit seiner Außenseite anliegt.

Selbstverständlich kann die in Figur 3 gezeigte Prüfstandrolle 1 auch mehr als ein Seitenwandelement 3 aufweisen (s. z.B. Figur 1), z.B. zwei die parallel zueinander in axialer Richtung der Welle 2 hintereinander angeordnet sind.

Erfindungsgemäß kann das einstückige Fahrbahnbelagelement 5, das bevorzugt zylinderförmig ist, von einer Seite der Prüfstandrolle 1 auf das Mantelelement 4 aufgeschoben. Bevorzugt wird dies von der Seite aus durchgeführt, die der Welle 2 abgewandt ist. Beim Wechseln eines Fahrbahnbelagelementes 5 wird dann mit wenig Zweitaufwand und wenig komplex zunächst ein bereits auf der Prüfstandrolle 1 angeordnetes einstückiges Fahrbahnbelagelement 5 abgezogen und danach ein anderes (neues) Fahrbahnbelagelement 5 aufgezogen.

Die Fixierung des Fahrbahnbelagelementes 5 auf dem Mantelelement 4, d.h. die ortsfeste Befestigung, kann erfindungsgemäß über verschiedene Möglichkeiten erfolgen. Eine Möglichkeit ist in den Figuren 1 und 2 bereits erörtert worden. Weitere, insbesondere zusätzliche Optionen, ergeben sich im Zusammenhang mit den Figuren 6 und 7, die unten eingehend beschrieben werden.

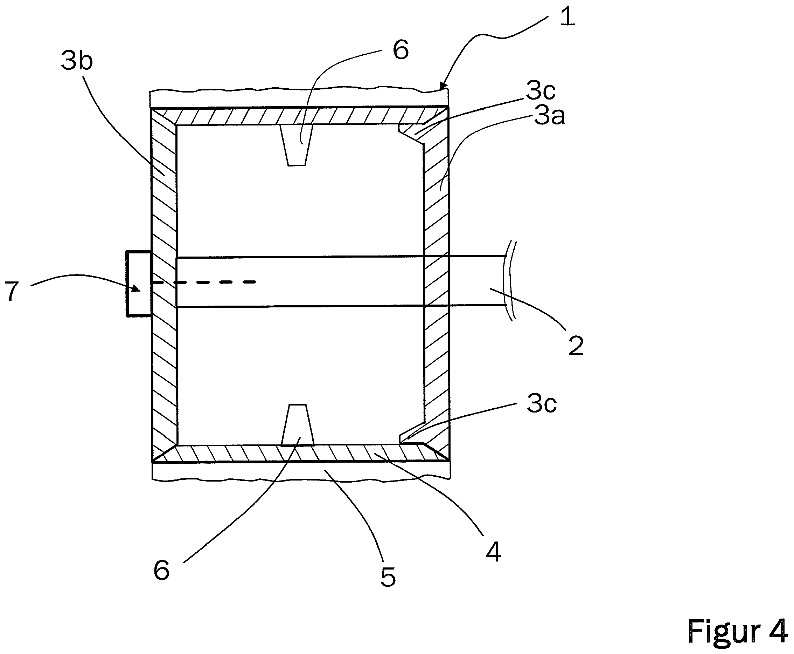

Figur 4 zeigt eine Prüfstandrolle 1, die zwei Seitenwandelemente 3a, 3b aufweist. Die Prüfstandrolle 1 nach Figur 4 ist ein geschlossener Hohlkörper, der von einen im Wesentlichen zylindrischen Mantelelement 4 und den beiden Seitenwandelementen 3a, 3b begrenzt wird. Wie auch das Seitenwandelement 3a der Figur 3 kann die Welle 2 mit dem Seitenwandelement 3a mittels Schraubverbindung, Schweißverbindung, etc. verbunden sein. Bei der Prüfstandrolle 1 gemäß Figur 4 durchstößt die Welle 2 das Seitenwandelement 3a und läuft entlang des axialen Zentrums des Mantelelementes 4 bis zum zweiten Seitenwandelement 3b. Das zweite Seitenwandelement 3b weist geeignete (nicht gezeigte) Einrichtungen auf, so dass mittels einer Schraubverbindung 7 die Welle 2 und das zweite Seitenwandelement 3b fest miteinander verbindbar sind. Die Außenkanten der beiden Seitenwandelemente 3a, 3b und des Mantelelementes 4 sind derart ausgebildet, dass die Kraft der Schraubverbindung 7 zwischen Welle 2 und zweitem Seitenwandelement 3b weiterhin auch das erste Seitenwandelement 3a und das Mantelelement 4 fest miteinander verbinden.

In Figur 4 ist gezeigt, dass die jeweiligen Kanten der Seitenwandelemente 3a, 3b schräg ausgebildet sind, so dass sowohl eine Kraftübertragung zwischen den Fügestellen möglich ist, als auch eine Zentrierung des Mantelelements 4 zwischen den beiden Seitenwandelementen 3a, 3b. Eine Gegenkraft zur Schraubverbindung wird auf der Seite des ersten Seitenwandelementes 3a z.B. aufgrund der festen Verbindung zwischen Welle 2 und erstem Seitenwandelement 3a erzeugt, so dass der Hohlkörper der Prüfstandrolle 1 formsteif und fest zusammengehalten wird.

Die Formsteifigkeit des Mantelelementes 4 kann durch zumindest ein zusätzliches Versteifungselement 6 erhöht werden, das, z.B. wie in Figur 4 gezeigt, mittig zwischen den beiden Seitenkanten des Mantelkörpers 4 angeordnet ist und im Schnitt dornförmig ausgebildet ist. Die in Figur 4 gezeigte Schnittform des Versteifungselementes 6 läuft innerhalb des Mantelelementes 4 an dessen Innenfläche entlang. Das Versteifungselement 6 kann dabei 360° der Innenfläche des Mantelelementes 4 bedecken oder segmentweise umlaufend angeordnet sein.

Weiterhin weist das erste Seitenwandelement 3a bevorzugt zumindest eine Zentriervorstehung 3c auf. Die Zentriervorstehung 3c ist im Bereich der Außenkante des ersten Seitenwandelementes 3a angeordnet. Die Zentriervorstehung 3c ragt aus der Querebene (senkrecht zur Axialrichtung des kreisförmigen Seitenwandelementes 3) heraus und ist ringförmig im Bereich der Außenkante des ersten Seitenwandelementes 3a ausgebildet.

Wie Figur 4 verdeutlich ist die zur Außenkante des ersten Seitenwandelementes 3a zeigende Fläche der Zentriervorstehung 3c derart ausgebildet, dass ein Durchmesser einer Innenfläche des Mantelelements 4 im Wesentlichen mit dem Außendurchmesser der Zentriervorstehung 3c übereinstimmt. Dies erleichtert einen Zusammenbau bzw. ein Anordnen des Mantelelementes 4 und des ersten Seitenwandelementes 3a. Genauer gesagt ermöglicht die Zentriervorstehung 3c, dass das Mantelelement 4 und das erste Seitenwandelelement 3a schnell zusammengefügt werden können und das Mantelelement 4 mit hoher Genauigkeit koaxial zur Welle 2 ausgerichtet werden kann.

Das Montieren des Fahrbahnbelages der in Figur 4 gezeigten Prüfstandrolle 1 kann dadurch erfolgen, dass auf die zusammengebaute Prüfstandrolle 1 das einstückige Fahrbahnbelagelement 5 seitlich aufgezogen wird. Die zylindersegmentförmigen Fahrbahnbelagelemente 5 werden dadurch montiert, dass diese mittels Schrauben oder dgl. oder der Befestigungseinrichtung 9 fixiert werden. Beim Montieren des einstückigen Fahrbahnbelagelementes 5 oder der mehreren zylindersegmentförmigen Fahrbahnbelagelemente 5 wird die Abweichung von der Grundform überwunden und dadurch eine verbesserte Haltekraft erzeugt.

Alternativ ist es auch möglich, dass das Fahrbahnbelagelement 5 derart gewechselt oder montiert wird, dass zunächst in einem ersten Schritt die Schraubverbindung 7 gelöst wird. Danach kann das zweite Seitenwandelement 3b von der Welle 2 entfernt werden. Nachdem das zweite Seitenwandelement 3b entfernt ist, kann auf sehr einfache Weise und sehr schnell das Mantelelement 4 zusammen mit dem darauf montierten Fahrbahnbelagelement 5 von der Welle 2 entfernt werden. Anschließend wird ein bereits vorbereitetes, anderes Mantelelement 4 mit einem bereits vormontierten Fahrbahnbelagelement 5 montiert. Dies erfolgt wie oben beschrieben wenig kompliziert, da das neue (andere) Mantelelement 4 lediglich mit der Zentriervorstehung 3c in Eingriff gebracht werden muss. Nachdem das Mantelelement 4 an dem ersten Seitenwandelement 3a angeordnet ist, wird das zweite Seitenwandelement 3b positioniert. Mittels der Schraubverbindung 7 wird die Prüfstandrolle 1 fest zusammengefügt. Dieser erfindungsgemäße Wechselvorgang erfolgt deutlich schneller als herkömmliche Verfahren.

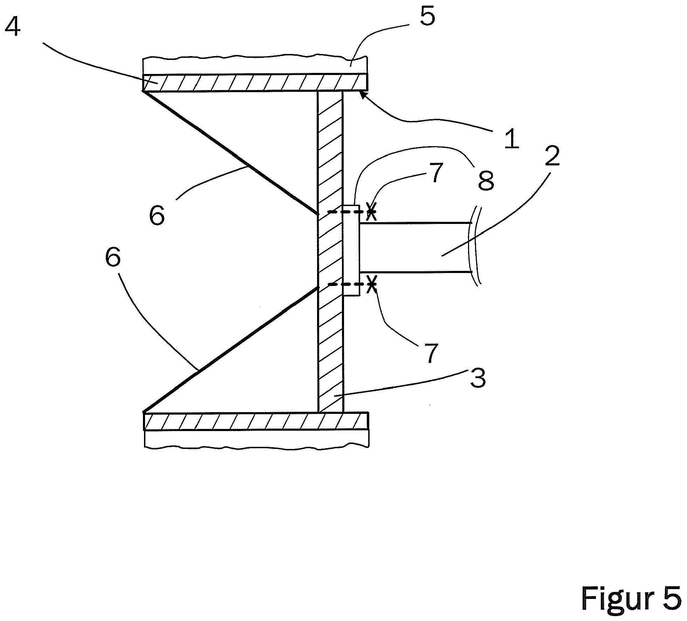

Figur 5 zeigt eine weitere Prüfstandrolle 1, die im Hinblick auf den Aufbau im Wesentlichen mit der Prüfstandrolle 1 gemäß Figur 3 übereinstimmt. In Figur 3 ist exemplarisch eine erfindungsgemäße, nichtlösbare Verbindung zwischen der Welle 2 und der Prüfstandrolle 1 gezeigt.

Figur 5 zeigt eine erfindungsgemäße, lösbare Verbindung zwischen Welle 2 und Prüfstandrolle 1. Konkret ist eine Schraubverbindung 7 gezeigt, wobei die Welle 2 über einen Flansch 8 mit dem Seitenwandelement 3 verbunden ist. Die Lösbarkeit der Verbindung ermöglicht eine weitere erfindungsgemäße Alternative zum Wechseln des Fahrbahnbelagelementes 5, d.h. gemäß Figur 5 wird die gesamte Prüfstandrolle 1 mit dem darauf montierten Fahrbahnbelagelement 5 gewechselt. Dazu wird erfindungsgemäß zunächst die Schraubverbindung 7 zwischen Welle 2 und Prüfstandrolle 1 gelöst. Danach wird die Prüfstandrolle 1 von der Welle 2 entfernt und eine andere (neue) Prüfstandrolle 1 mit einem bereits zuvor darauf angeordneten Fahrbahnbelagelement 5 wird an der Welle positioniert. Danach wird in sehr zeiteffektiver Weise die Schraubverbindung 7 wieder angeordnet und festgezogen.

Selbstverständlich kann die Schraubverbindung 7, die in Figuren 4 und 5 gezeigt ist, auch durch einen alternativen lösbaren Verbindungsmechanismus ersetzt werden, wie z.B. Schnellspanner.

Weiterhin sei hier explizit angegeben, dass die erfindungsgemäßen Beispiele zum Wechseln bzw. Montieren der Fahrbahnbelagelemente 5 sich nicht gegenseitig ausschließen. Selbstverständlich kann auch bei einer Prüfstandrolle 1 wie in Figur 5 gezeigt, das Fahrbahnbelagelement 5 seitlich abgezogen oder aufgeschoben werden, wie dies beispielhaft im Zusammenhang mit Figur 3 erläutert wurde. Das Gleiche gilt auch für die in Figur 4 gezeigte Prüfstandrolle 1.

Weiterhin zusätzlich zeigen die Figuren 6 und 7 eine Befestigungseinrichtung 9, die es ermöglicht, dass das Fahrbahnbelagelement 5 oder mehrere Fahrbahnbelagelemente 5 (kreisbogenförmige/zylindersegmentförmige Segmente) auf der Oberfläche 4a des Mantelelementes 4 ortsfest mit noch zuverlässigerer Fixierung montiert werden können.

Figur 6 zeigt einen Teilausschnitt einer Prüfstandrolle 1, wie sie z.B. in Figur 3 gezeigt ist. Figur 6 zeigt eine Befestigungseinrichtung 9, die das Fahrbahnbelagelement 5 ortsfest mit dem Mantelelement 4 verbindet. Das Fahrbahnbelagelement 5 weist eine obere Schicht, die die Oberflächenkontur 5a umfasst, und ein Trägerelement 5b auf. Das Trägerelement 5b ist als optional anzusehen. Die Befestigungseinrichtung 9 weist auf jeder Seitenkante des Mantelelementes 4 jeweils ein Eingriffselement 10, 11 auf. Das in der Figur links gezeigte erste Eingriffselement 10 hat zumindest zwei Eingriffsabschnitte 10a, 10b. Der untere Eingriffsabschnitt 10b umgreift die Seitenkante des Mantelelementes 4. Der obere Eingriffsabschnitt 10a umgreift die Seitenkante des Fahrbahnbelagelementes 5, wobei der obere Eingriffsabschnitt 10a zur seiner Spitze hin verjüngend verläuft.

Mittels der Eingriffsabschnitte 10a, 10b und deren Anordnung (und/oder die verjüngte Spitze) wird im montierten Zustand eine Klemmkraft zwischen Fahrbahnbelagelement 5, Mantelelement 4 und erstem Eingriffselement 10 (bzw. oberen Eingriffsabschnitt 10a) erzeugt. Das erste Eingriffselement 10 ist fest mit dem Mantelelement 4 verbunden, d.h. entweder ist es einstückig mit dem Mantelelement 4 ausgeführt oder mittels einer lösbaren oder nichtlösbaren Verbindungstechnik mit dem Mantelelement 4 verbunden.

Das zweite Eingriffselement 11 ist auf der gegenüber angeordneten Seitenkante zum ersten Eingriffselement 10 an dem Mantelelement 4 positioniert. Das zweite Eingriffselement 11 weist zumindest einen Eingriffsabschnitt 11a auf, der wie der zweite Eingriffsabschnitt 10a des ersten Eingriffselementes 10 eine verjüngende Kante aufweist, die eine Klemmkraft zwischen Mantelelement 4, Fahrbahnbelagelement 5 und zweitem Eingriffselement 11 (bzw. dessen Eingriffsabschnitt 11a) erzeugt.

Eine Schraubverbindung 7 zwischen dem zweiten Eingriffselement 11 und dem Mantelelement 4 ermöglicht, dass das zweite Eingriffselement 11 fest mit dem Mantelelement 4 verbunden werden kann, nachdem das Fahrbahnbelagelement 5 auf dem Rollenmantelelement 4 angeordnet wurde. Weiterhin ermöglicht die Schraubverbindung 7, dass eine Klemmkraft in axialer Richtung der Welle 2 zwischen den beiden Eingriffselementen 10, 11 und dem Fahrbahnbelagelement 5 eingestellt werden kann. Dies ermöglicht eine sichere und schnelle Fixierung des Fahrbahnbelagelementes 5.

Weiterhin ist festzuhalten, dass die Anordnung der beiden Eingriffselemente 10, 11 auch seitlich vertauscht zu der Darstellung gemäß Figur 6 vorgesehen sein kann.

Weiterhin ist es auch möglich, wie in Figur 7 gezeigt wird, dass das erste Eingriffselement 10 einstückig mit der Trägerplatte 5b ausgebildet ist oder fest oder lösbar mit der Trägerplatte 5b verbunden ist. Figur 7 zeigt, dass das erste Eingriffselement 10 zumindest einen unteren Eingriffsabschnitt 10b aufweist, der die Seitenkante des Mantelelementes 4 sicher umgreift. Selbstverständlich kann auch das erste Eingriffselement 10 nach Figur 7 einen weiteren Eingriffsabschnitt 10a aufweisen wie dies in Figur 6 gezeigt ist. Ferner kann das Fahrbahnbelagelement 5 auch keine Trägerplatte 5b aufweisen, so dass das erste Eingriffselement 10 einstückig mit dem Fahrbahnbelagelement 5 (der Schicht mit der Oberflächenkontur 5a) oder fest/lösbar verbunden mit dem Fahrbahnbelagelement 5 ist.

Wenn das Fahrbahnbelagelement 5 auf dem Rollenmantelelement 4 angeordnet wurde, und das Fahrbahnbelagelement 5 durch (teil-)elastische Verbiegen an das Rollenmantelelement 4 angepasst wurde, so kann das erste Eingriffselement 10 nach Figur 7 in Eingriff mit der Seitenkante des Mantelelementes 4 kommen. Dadurch wird eine axiale Positionierung des Fahrbahnbelagelementes 5 gewährleistet. In einem weiteren Schritt kann das zweite Eingriffselement 11 auf der gegenüberliegenden Seitenkante des Mantelelementes 4 angeordnet werden.

Gemäß Figur 7 weist auch das zweite Eingriffselement 11 zumindest einen unteren Eingriffsabschnitt 11b auf. Selbstverständlich kann aber auch analog zum ersten Eingriffselement 10 nach Figur 6 ein oberer Eingriffsabschnitt 11a vorgesehen sein. Das zweite Eingriffselement 11 wird mittels einer Schraubverbindung 7 zwischen dem Fahrbahnbelagelement 5 oder der Trägerplatte 5b und dem zweiten Eingriffselement 11 befestigt. Durch ein Anziehen der Schraubverbindung 7 wird eine fein einstellbare Klemmkraft zwischen den Eingriffsabschnitten 10b, 11b der beiden Eingriffselemente 10, 11 erzeugt, die das Fahrbahnbelagelement 5 sicher mit dem Mantelelement 4 verbindet.

Zusammenfassend ermöglicht die vorliegende Erfindung somit ein schnelles und wenig aufwendiges Wechseln eines Fahrbahnbelagelementes 5. Die Fixierung des erfindungsgemäßen Fahrbahnbelagelementes 5 auf dem Rollenmantelelement 4 wird dadurch deutlich verbessert, dass eine erhöhte Haltekraft auf das Fahrbahnbelagelement 5 wirken kann.
- 1: (Prüfstand-)Rolle
- 2: (Antriebs-)Welle
- 3: (Rollen-)Seitenwandelement
- 3a: Erstes Seitenwandelement
- 3b: Zweites Seitenwandelement
- 3c: Zentriervorstehung
- 4: (Rollen-)Mantelelement
- 4a: äußere Mantelfläche
- B₄: Breite des Mantelelementes
- 5: Fahrbahnbelagelement
- B₅: Breite des Fahrbahnbelagelementes
- 5a: Oberflächenkontur
- 5b: Trägerelement
- 6: Versteifungselement
- 7: Schraubverbindung
- 8: Flansch
- 9: Befestigungseinrichtung
- 10: Erstes Eingriffselement
- 11: Zweites Eingriffselement
- 10a, 10b: Eingriffsabschnitt(e)
- 11a: Eingriffsabschnitt

## Patentansprüche

1. Prüfstandrolle (1) eines Rollenprüfstandes umfassend
- zumindest ein Fahrbahnbelagelement (5),
- zumindest ein Rollenmantelelement (4), auf dessen äußerer Mantelfläche (4a) zumindest ein Fahrbahnbelagelement (5) mittels zumindest einem Befestigungsmittel montiert ist, und
- zumindest ein Rollenseitenwandelement (3), das mit dem zumindest einen Rollenmantelelement (4) verbunden ist, wobei
das zumindest eine Fahrbahnbelagelement (5) eine Oberflächenkontur (5a) aufweist, die eine Oberflächenbeschaffenheit eines Fahrbahnbelages wiedergibt,
**gekennzeichnet dadurch, dass**
das Fahrbahnbelagelement (5) im auf der äußeren Mantelfläche (4a) montierten Zustand elastisch oder teilelastisch verformt ist und eine Form aufweist, die von einer Form des Fahrbahnbelagelementes (5) im nicht-montierten Zustand abweicht, und
das Fahrbahnbelagelement (5) im auf der äußeren Mantelfläche (4a) montierten Zustand eine zusätzliche mechanische Spannung im Vergleich zu einem Spannungszustand des Fahrbahnbelagelementes (5) im nicht-montierten Zustand aufweist.

2. Die Prüfstandrolle (1) gemäß Patentanspruch 1, wobei
das Fahrbahnbelagelement (5) im nicht auf der äußeren Mantelfläche (4a) montierten Zustand eine Abweichung von einer Grundform aufweist, wobei
die Grundform des Fahrbahnbelagelementes (5) im Wesentlichen mit einer Form der äußeren Mantelfläche (4a) übereinstimmt, und
das Fahrbahnbelagelement (5) im auf der äußeren Mantelfläche (4a) montierten Zustand eine Form aufweist, die im Wesentlichen mit der Grundform übereinstimmt.

3. Die Prüfstandrolle (1) gemäß zumindest einem der voranstehenden Patentansprüche, wobei
die Grundform des Fahrbahnbelagelementes (5) im Wesentlichen zylindrisch oder im Wesentlichen zylindersegmentförmig ist, und
das Fahrbahnbelagelement (5) beim Montieren auf der äußeren Mantelfläche (4a) des Rollenmantelelementes (4) an die Form der äußeren Mantelfläche (4a) angepasst wird, wobei die zusätzliche mechanische Spannung in das Fahrbahnbelagelement (5) eingebracht wird.

4. Die Prüfstandrolle (1) gemäß zumindest einem der voranstehenden Patentansprüche, wobei
das Rollenmantelelement (4) im Wesentlichen zylindrisch oder konisch ausgebildet ist und das Rollenmantelelement (4) eine vorbestimmten Breite (B₄) in einer zur Prüfstandrolle (1) axialen Richtung aufweist, wobei
eine Breite (B₅) des Fahrbahnbelagelementes (5) im Wesentlichen kleiner oder gleich der Breite des Rollenmantelelementes (4) ist.

5. Die Prüfstandrolle (1) gemäß zumindest einem der voranstehenden Patentansprüche, wobei
entweder ein einstückiges, im Wesentlichen zylindrisches Fahrbahnbelagelement (5) auf dem Rollenmantelelement (4) der Prüfstandrolle (1) montierbar ist oder
mehrere, im Wesentlichen zylindersegmentförmige Fahrbahnbelagelemente (5) auf dem Rollenmantelelement (4) der Prüfstandrolle (1) montierbar sind.

6. Die Prüfstandrolle (1) gemäß zumindest einem der voranstehenden Patentansprüche, wobei
das Fahrbahnbelagelement (5) in einem nicht auf dem Rollenmantelelement (4) montierten Zustand eine erste Abweichung von der Grundform des Fahrbahnbelagelementes (5) aufweist, wobei
die erste Abweichung eine Abweichung von der Zylinderform oder Zylindersegmentform ist.

7. Die Prüfstandrolle (1) gemäß zumindest einem der voranstehenden Patentansprüche, wobei
das Fahrbahnbelagelement (5) in einem nicht auf dem Rollenmantelelement (4) montierten Zustand eine zweite Abweichung von der Grundform des Fahrbahnbelagelementes (5) aufweist, wobei
die Seitenkanten des Fahrbahnbelagelementes (5) derart verformt sind, dass ein axialer Querschnitt des Fahrbahnbelagelementes (5) im Wesentlichen U-förmig geformt ist.

8. Die Prüfstandrolle (1) gemäß zumindest einem der voranstehenden Patentansprüche, wobei
das Fahrbahnbelagelement (5) in einem nicht auf dem Rollenmantelelement (4) montierten Zustand eine dritte Abweichung von der Grundform des Fahrbahnbelagelementes (5) aufweist, wobei
der Radius des Fahrbahnbelagelementes (5) kleiner ist als ein äußerer Radius des Rollenmantelelementes (4).

9. Die Prüfstandrolle (1) gemäß zumindest einem der voranstehenden Patentansprüche, wobei
das zumindest eine Fahrbahnbelagelement (5) mittels dem zumindest einem an dessen Seitenkanten angeordneten Befestigungsmittel mit der äußeren Oberfläche des Rollenmantelelementes (4) fest verbindbar ist.

10. Die Prüfstandrolle (1) gemäß zumindest einem der voranstehenden Patentansprüche, wobei
das zumindest eine Befestigungsmittel eine kraftschlüssige Schraube oder Niete darstellt.

11. Die Prüfstandrolle (1) gemäß zumindest einem der voranstehenden Patentansprüche, wobei
das zumindest eine Befestigungsmittel eine Befestigungseinrichtung (9) ist, die an den Seitenkanten des Rollenmantelelementes (4) formschlüssig eingreift und eine vorbestimmte Klemmkraft auf das Fahrbahnbelagelement (5) ausübt.

12. Die Prüfstandrolle (1) gemäß zumindest einem der voranstehenden Patentansprüche, wobei
ein erstes Eingriffselement (10) der Befestigungseinrichtung (9) mit einer Seitenkante des Rollenmantelelementes (4) in Eingriff bringbar ist und mittels einer Schraubverbindung (7) und eines zweiten Eingriffselementes (11) eine vorbestimmte Klemmkraft zwischen Rollenmantelelement (4), Fahrbahnbelagelement (5) und Befestigungseinrichtung (9) einstellbar ist.

13. Verfahren zum Montieren bzw. Demontieren zumindest eines Fahrbahnbelagelementes (5), wobei das Fahrbahnbelagelement (5) die Merkmale gemäß zumindest einem der Patentansprüche 1-12 aufweist, **gekennzeichnet dadurch, dass**
das zumindest eine Fahrbahnbelagelement (5) auf dem Rollenmantelelement (4) elastisch oder teilelastisch verformt montiert wird, wobei
eine Form des Fahrbahnbelagelementes (5) an eine Form der äußeren Rollenmantelfläche (4a) des Rollenmantelelementes (4) angepasst wird und mittels des zumindest einen Befestigungsmittels fixiert wird.

14. Verfahren gemäß Patentanspruch 13, wobei
die Verfahrensschritte gemäß Patentanspruch 13 bereits vorbereitet worden sind, und
das Rollenmantelelement (4), auf dem das Fahrbahnbelagelement (5) bereits vormontiert befestigt ist, von der Prüfstandrolle (1) abgenommen wird bzw. an der Prüfstandrolle (1) angeordnet und befestigt wird.

15. Verfahren gemäß zumindest einem der Patentansprüche 13-14, wobei
die Verfahrensschritte gemäß zumindest einem der Patentansprüche 12-13 bereits vorbereitet worden sind, und wobei
das Rollenmantelelement (4) an der Prüfstandrolle (1) fest angeordnet ist, das Verfahren weiter umfassend die Schritte, dass
das Rollenmantelelement (4) mittels einer Zentriereinrichtung (3c) des Rollenseitenwandelementes (3a, 3b) seitlich zu dem Rollenseitenwandelement (3a, 3b) angeordnet wird,
zumindest ein weiteres Rollenseitenwandelement (3a, 3b) an dem Rollenmantelelement (4) seitlich angeordnet wird, so dass ein geschlossener Rollenkörper gebildet wird, und
mittels einer Schraubverbindung (7) die Rollenseitenwandelemente (3a, 3b) und das Rollenmantelelement (4) mit der Antriebswelle (2) fest verbunden werden.

## Claims

1. A test bench roller (1) of a roller test bench comprising
- at least one carriageway lining element (5)
- at least one roller coating element (4), on an outer coating surface (4a) of which at least one carriageway lining element (5) is mounted by means of a fastening means, and
- at least one roller side wall element (3), which is connected to said at least one roller coating element (4), wherein
said at least one carriageway lining element (5) has a surface contour (5a), which reproduces a surface finish of a carriageway lining,
**characterized in that**
said carriageway lining element (5), in a state of being mounted on said outer coating surface (4a), is elastically or partially elastically deformed and has a shape which deviates from the shape of said carriageway lining element (5) in the non-mounted state, and,
said carriageway lining element (5), in the state of being mounted on said outer coating surface (4a), is under additional mechanical stress compared to a stress state of said carriageway lining element (5) in the non-mounted state.

2. The test bench roller (1) according to claim 1, wherein said carriageway lining element (5), in the state of not being mounted on said outer coating surface (4a), has a deviation from a basic shape, wherein
the basic shape of said carriageway lining element (5) substantially coincides with a shape of said outer coating surface (4a), and
said carriageway lining element (5), in the state of being mounted on said outer coating surface (4a), has a shape which substantially coincides with the basic shape.

3. The test bench roller (1) according to at least one of the preceding claims, wherein
the basic shape of said carriageway lining element (5) is substantially cylindrical or substantially cylinder segment shaped, and
said carriageway lining element (5) is adjusted to the shape of said outer coating surface (4a), when it is mounted on said outer coating surface (4a) of said roller coating element (4), wherein the additional mechanical stress is introduced into said carriageway lining element (5).

4. The test bench roller (1) according to at least one of the preceding claims, wherein
said roller coating element (4) is formed substantially cylindrical or conical and said roller coating element (4) has a predetermined width (B₄) in an axial direction with respect to said test bench roller (1), wherein
a width (B₅) of said carriageway lining element (5) is substantially equal or less than the width of said roller coating element (4).

5. The test bench roller (1) according to at least one of the preceding claims, wherein
either a one-piece, substantially cylindrical carriageway lining element (5) is mountable on said roller coating element (4) of said test bench roller (1), or
a plurality of substantially cylinder segment shaped carriageway lining elements (5) are mountable on said roller coating element (4) of said test bench roller (1).

6. The test bench roller (1) according to at least one of the preceding claims, wherein
said carriageway lining element (5), in a state of not being mounted on said outer coating surface (4a), has a first deviation from the basic shape of said carriageway lining element (5), wherein
said first deviation is a deviation from the cylinder shape or cylinder segment shape.

7. The test bench roller (1) according to at least one of the preceding claims, wherein
said carriageway lining element (5), in a state of not being mounted on said outer coating surface (4a), has a second deviation from the basic shape of said carriageway lining element (5), wherein
the side edges of said carriageway lining element (5) are deformed such that an axial cross section of said carriageway lining element (5) is substantially U-shaped.

8. The test bench roller (1) according to at least one of the preceding claims, wherein
said carriageway lining element (5), in a state of not being mounted on said outer coating surface (4a), has a third deviation from the basic shape of said carriageway lining element (5), wherein
the radius of said carriageway lining element (5) is smaller than an outer radius of said roller coating element (4).

9. The test bench roller (1) according to at least one of the preceding claims, wherein
said at least one carriageway lining element (5) is firmly connectable to said outer surface of said roller coating element (4) by means of at least one fastening means arranged at the side edges thereof.

10. The test bench roller (1) according to at least one of the preceding claims, wherein
said at least one fastening means comprises a friction-locking screw or rivet.

11. The test bench roller (1) according to at least one of the preceding claims, wherein
said at least one fastening means is a fastening device (9), which engages form-lockingly at the lateral edges of said roller coating element (4) and applies a predetermined clamping force to said carriageway lining element (5).

12. The test bench roller (1) according to at least one of the preceding claims, wherein
a first engagement member (10) of said fastening device (9) is engageable with a side edge of said roller coating element (4) and a predetermined clamping force between said roller coating element (4), said carriageway lining element (5) and said fastening device (9) is adjustable by means of a screw connection (7) and a second engagement member (11).

13. A method for mounting or demounting at least one carriageway lining element (5), wherein said carriageway lining element (5) has the features according to at least one of the claims 1-12, **characterized in that**
said at least one carriageway lining element (5) is mounted on said roller coating element (4) in an elastically or partially elastically deformed manner, wherein
a shape of said carriageway lining element (5) is adjusted to a shape of said outer roller coating surface (4a) of said roller coating element (4) and is fixed by means of said at least one fastening means.

14. The method according to claim 13, wherein
the method steps according to claim 13 have already been prepared, and
said roller coating element (4), on which said carriageway lining element (5) is already premounted and fastened, is removed from said test bench roller (1) or disposed and fixed on said test bench roller (1).

15. The method according to at least one of the claims 13-14, wherein
the method steps according to at least one of the claims 13-14 have already been prepared, and
wherein said roller coating element (4) is fixedly disposed on said test bench roller (1), the method further comprising the steps that
the roller coating element (4) is arranged to the side of said roller side wall element (3a, 3b) by means of a centering device (3c) of said roller side wall element (3a, 3b),
at least one further roller side wall element (3a, 3b) is arranged to the side of said roller coating element (4), so that a closed roller body is formed, and
said roller side wall elements (3a, 3b) and said roller coating element (4) are firmly connected to the drive shaft (2) by means of a screw connection (7).

## Revendications

1. Rouleau (1) d'un banc d'essai à rouleaux, comportant
- au moins un élément de revêtement de chaussée (5),
- au moins un élément enveloppe de rouleau (4) sur la surface enveloppe extérieure (4a) duquel est monté au moins un élément de revêtement de chaussée (5) au moyen d'au moins un organe de fixation, et
- au moins un élément de paroi latérale de rouleau (3) qui est relié audit au moins un élément enveloppe de rouleau (4),
dans lequel
ledit au moins un élément de revêtement de chaussée (5) présente un contour de surface (5a) qui reflète l'état de surface d'un revêtement de chaussée,
**caractérisé en ce que**
dans l'état monté sur la surface enveloppe extérieure (4a), l'élément de revêtement de chaussée (5) est déformé élastiquement ou partiellement élastiquement et présente une forme qui dévie d'une forme de l'élément de revêtement de chaussée (5) à l'état non monté, et
dans l'état monté sur la surface enveloppe extérieure (4a), l'élément de revêtement de chaussée (5) présente une contrainte mécanique supplémentaire par comparaison à un état de contrainte de l'élément de revêtement de chaussée (5) à l'état non monté.

2. Rouleau de banc d'essai (1) selon la revendication 1, dans lequel
dans l'état non monté sur la surface enveloppe extérieure (4a), l'élément de revêtement de chaussée (5) présente une déviation d'une forme de base, et la forme de base de l'élément de revêtement de chaussée (5) coïncide sensiblement avec une forme de la surface enveloppe extérieure (4a), et
dans l'état monté sur la surface enveloppe extérieure (4a), l'élément de revêtement de chaussée (5) présente une forme qui coïncide sensiblement avec la forme de base.

3. Rouleau de banc d'essai (1) selon l'une des revendications précédentes, dans lequel
la forme de base de l'élément de revêtement de chaussée (5) est sensiblement cylindrique ou sensiblement en forme de segment de cylindre, et
lors du montage sur la surface enveloppe extérieure (4a) de l'élément enveloppe de rouleau (4), l'élément de revêtement de chaussée (5) est adapté à la forme de la surface enveloppe extérieure (4a), la contrainte mécanique supplémentaire étant introduite dans l'élément de revêtement de chaussée (5).

4. Rouleau de banc d'essai (1) selon l'une des revendications précédentes, dans lequel
l'élément enveloppe de rouleau (4) est réalisé sensiblement cylindrique ou conique, et l'élément enveloppe de rouleau (4) présente une largeur prédéterminée (B₄) dans une direction axiale par rapport au rouleau de banc d'essai (1), et
une largeur (B₅) de l'élément de revêtement de chaussée (5) est sensiblement inférieure ou égale à la largeur de l'élément enveloppe de rouleau (4).

5. Rouleau de banc d'essai (1) selon l'une au moins des revendications précédentes, dans lequel
soit un l'élément de revêtement de chaussée (5) sensiblement cylindrique réalisé d'un seul tenant peut être monté sur l'élément enveloppe de rouleau (4) du rouleau de banc d'essai (1),
soit plusieurs éléments de revêtement de chaussée (5) sensiblement en forme de segment de cylindre peuvent être montés sur l'élément enveloppe de rouleau (4) du rouleau de banc d'essai (1).

6. Rouleau de banc d'essai (1) selon l'une au moins des revendications précédentes, dans lequel
dans un état non monté sur l'élément enveloppe de rouleau (4), l'élément de revêtement de chaussée (5) présente une première déviation de la forme de base de l'élément de revêtement de chaussée (5), et
la première déviation est une déviation de la forme cylindrique ou de la forme de segment de cylindre.

7. Rouleau de banc d'essai (1) selon l'une au moins des revendications précédentes, dans lequel
dans un état non monté sur l'élément enveloppe de rouleau (4), l'élément de revêtement de chaussée (5) présente une seconde déviation de la forme de base de l'élément de revêtement de chaussée (5), et
les arêtes latérales de l'élément de revêtement de chaussée (5) sont déformées de telle sorte qu'une section transversale axiale de l'élément de revêtement de chaussée (5) est formée sensiblement en forme de U.

8. Rouleau de banc d'essai (1) selon l'une au moins des revendications précédentes, dans lequel
dans un état non monté sur l'élément enveloppe de rouleau (4), l'élément de revêtement de chaussée (5) présente une troisième déviation de la forme de base de l'élément de revêtement de chaussée (5), et
le rayon de l'élément de revêtement de chaussée (5) est inférieur au rayon extérieur de l'élément enveloppe de rouleau (4).

9. Rouleau de banc d'essai (1) selon l'une au moins des revendications précédentes, dans lequel
ledit au moins un élément de revêtement de chaussée (5) peut être fermement relié à la surface extérieure de l'élément enveloppe de rouleau (4) au moyen dudit au moins un organe de fixation agencé sur ses arêtes latérales.

10. Rouleau de banc d'essai (1) selon l'une au moins des revendications précédentes, dans lequel
ledit au moins un organe de fixation représente une vis ou un rivet opérant par coopération de forces.

11. Rouleau de banc d'essai (1) selon l'une au moins des revendications précédentes, dans lequel
ledit au moins un organe de fixation est un dispositif de fixation (9) qui vient s'engager par coopération de formes sur les arêtes latérales de l'élément enveloppe de rouleau (4) et qui exerce une force de coincement prédéterminée sur l'élément de revêtement de chaussée (5).

12. Rouleau de banc d'essai (1) selon l'une au moins des revendications précédentes, dans lequel
un premier élément d'engagement (10) du dispositif de fixation (9) peut être amené en engagement avec une arête latérale de l'élément enveloppe de rouleau (4), et une force de coincement prédéterminée entre l'élément enveloppe de rouleau (4), l'élément de revêtement de chaussée (5) et le dispositif de fixation (9) est réglable au moyen d'une liaison vissée (7) et d'un second élément d'engagement (11).

13. Procédé de montage ou de démontage d'au moins un élément de revêtement de chaussée (5), dans lequel l'élément de revêtement de chaussée (5) présente les caractéristiques selon l'une au moins des revendications 1 - 12, **caractérisé en ce que**
on monte ledit au moins un élément de revêtement de chaussée (5) sur l'élément enveloppe de rouleau (4) en étant déformé élastiquement ou partiellement élastiquement, et
on adapte une forme de l'élément de revêtement de chaussée (5) à une forme de la surface enveloppe extérieure (4a) de l'élément enveloppe de rouleau (4) et on le fixe au moyen dudit au moins un organe de fixation.

14. Procédé selon la revendication 13, dans lequel
les étapes de procédé selon la revendication 13 ont déjà été préparées, et
on enlève du rouleau de banc d'essai (1) l'élément enveloppe de rouleau (4) sur lequel l'élément de revêtement de chaussée (5) est fixé en étant déjà prémonté, ou on le pose et on le fixe sur le rouleau de banc d'essai (1).

15. Procédé selon l'une au moins des revendications 13 - 14, dans lequel
les étapes de procédé selon l'une au moins des revendications 12 - 13 ont déjà été préparées, et
l'élément enveloppe de rouleau (4) est fermement agencé sur le rouleau de banc d'essai (1), le procédé comprenant en outre les étapes consistant à
agencer l'élément enveloppe de rouleau (4) latéralement par rapport à l'élément de paroi latérale de rouleau (3a, 3b) au moyen d'un dispositif de centrage (3c) de l'élément de paroi latérale de rouleau (3a, 3b),
agencer au moins un autre élément de paroi latérale de rouleau (3a, 3b) latéralement sur l'élément enveloppe de rouleau (4), de manière à former un corps de rouleau fermé, et
relier fermement les éléments de paroi latérale de rouleau (3a, 3b) et l'élément enveloppe de rouleau (4) à l'arbre d'entraînement (2) au moyen d'une liaison vissée (7).
